# FASCICULE DE BREVET EUROPEEN

(11) **EP 3 352 568 B1**
(45) Date de publication et mention de la délivrance du brevet: **18.03.2020**
(21) Numéro de dépôt: 16777594.9
(22) Date de dépôt: 23.09.2016
(51) Int. Cl.: A01N 25/04, A01N 25/18, A01N 25/34, A01M 1/00, F42B 12/50, A01P 19/00

(54) **PROJECTILES OXODEGRADABLES CONTENANT DES PHEROMONES**
PHEROMONE ENTHALTENDE OXO-ABBAUBARE PROJEKTILE
OXO-DEGRADABLE PROJECTILES CONTAINING PHEROMONES

(30) Priorité: 25.09.2015 FR 1559087
(43) Date de publication de la demande: 01.08.2018
(73) Titulaire: Melchior Material And Life Science France, 64170 Lacq (FR)
(72) Inventeur: GUERRET, Olivier, 46170 Pern (FR); DUFOUR, Samuel, 64300 Orthez (FR)
(74) Mandataire: Regimbeau
(86) Numéro de dépôt international: PCT/EP2016/072668
(87) Numéro de publication internationale: WO 2017/050956

(56) Documents cités:
- EP-A1- 1 230 855
- EP-A1- 1 652 430
- WO-A1-2012/034167
- WO-A2-2009/090545
- WO-A2-2012/095444
- US-A1- 2002 061 325

## Description

### Introduction

La présente invention concerne la fabrication et l'utilisation de projectiles de type billes de paint-ball contenant des phéromones telles que les phéromones de chenilles processionnaires, encapsulées dans une formulation aqueuse de type émulsion. Ces formulations sont capables de relarguer ces phéromones de manière prolongée. Ces projectiles ont la particularité de contenir une formulation aqueuse de phéromone encapsulée compatible avec l'enveloppe du projectile composée de polymère oxodégradable ou oxo-biodégradable. Un autre objet de l'invention est l'utilisation de ces systèmes innovants pour le traitement de forêts ou de vergers contre des insectes ravageurs via la technique de confusion sexuelle.

### Art antérieur

L'utilisation de phéromones pour le contrôle des populations d'insectes en agriculture ou en sylviculture est bien connue de l'homme du métier. Une phéromone est une substance chimique produite par un animal et qui est un stimulus pour les individus de la même espèce ou d'une autre espèce. Les phéromones peuvent donc être produites soit par des organismes vivants soit de manière artificielle par synthèse chimique.

Le principe d'action des traitements à base de phéromones est soit de guider les insectes vers un piège à insectes soit d'introduire une confusion sexuelle en saturant de phéromones les antennes des insectes qui permettent normalement à un mâle de retrouver des femelles (ou le contraire) (Behavior-modifying chemicals for insect management : applications of pheromones and other attractants, Chapter 4 edited by Richard L. Ridgway, Robert M. Silverstein, May N. Inscoe).

Dans le cas de l'arboriculture, les techniques habituelles de diffusion des phéromones sont des bouteilles à mèche, des vaporisateurs programmables, ou des bandes imbibées de phéromones suspendues aux branches. Citons par exemple des bouteilles à mèche telle que celles vendues sous les marques Rhynchotrak®, ou Rhyncopro®, des plastiques (Cosmotrack®) ou des gels imbibés de la substance contenant les phéromones (par exemple US 20110014257 ou US 8828374 B2), des capsules en plastique poreuses (produits de BASF par exemple vendu sous la marque Rak®) ou des technologies de vaporisateurs programmables (US 2008/0184614, ou produit Checkmate®). Ces techniques, pour intéressantes qu'elles soient, présentent de nombreux défauts dont leur coût de mise en oeuvre (qui comprend la pose et la dépose des diffuseurs) ou leur coût de fabrication. De plus, lorsqu'il s'agit de sylviculture, les problématiques de facilité de pose deviennent encore plus évidentes du fait de la hauteur des arbres et de la difficulté d'accès à certains endroits.

D'autres techniques ont donc été envisagées comme l'épandage aérien de microparticules (Brevet US 6540991), ou l'utilisation de projectiles lancés dans les branches d'arbres. Ces dernières techniques sont prometteuses mais rencontrent des objections quant au respect de l'environnement.

Ainsi, dès 1974, James C. Hale eut l'idée d'utiliser des systèmes de lancement de projectiles du type pistolet ou fusil pour marquer les arbres (brevet US 3788298). Plusieurs propositions furent ensuite faites pour adapter cette technique au traitement des forêts, avec des pesticides ou des phéromones, contre leurs ravageurs avec notamment la mise au point de divers types de projectiles : projectiles reliés par un ressort comme dans le brevet US 8561343, cartouches projectiles ou explosives à un ou deux compartiments comme décrit dans US 6772694B1 ou US 200606518A1. En effet, une des difficultés majeures pour concevoir des projectiles adaptés à un lanceur tel qu'un pistolet ou un fusil à air comprimé est que les « balles » doivent à la fois être suffisamment résistantes, compatibles chimiquement avec leur contenu (composition à base de phéromones ou de pesticides) et de rupture aisée au moment de l'impact. Ainsi les projectiles utilisés sont souvent constituées d'une enveloppe en gélatine (brevet US20020061325 A) qui n'est pas compatible avec les compositions de phéromone contenant de l'eau (problème de ramollissement de l'enveloppe de gélatine en présence d'un milieu aqueux ce qui rend sa projection impossible mécaniquement). Le document US20020061325 indique précisément que les enveloppes en gélatine sont destinées à contenir des remplissages hydrophobes du fait de cette incompatibilité avec des compositions de remplissage à base d'eau ou contenant de l'eau. Le stockage et le transport des projectiles dont l'enveloppe est en gélatine est ainsi problématique car il convient de prévenir tout contact avec un environnement humide ce qui implique de les conserver et de les transporter dans des emballages étanches hermétiques thermosoudés. Autant de telle compositions se prêtent à une utilisation loisir de type paint-ball lors de laquelle, une fois ouvert le contenu du sac est rapidement utilisé compte tenu de la cadence de tir; pour des applications en marquage d'arbre en forêt, l'humidité ambiante associée à une cadence beaucoup plus faible entraîne une dégradation de l'enveloppe par ramollissement.

Pourtant, l'intérêt de formulations aqueuses pour relarguer progressivement les phéromones est important car elles sont compatibles avec l'environnement. Si la matrice des microparticules est elle-même biodégradable, l'ensemble du système (enveloppe et formulation aqueuse) est lui-même biodégradable ce qui le rend propre à une utilisation en milieu naturel. Par ailleurs, si un autre solvant que l'eau était utilisé, son évaporation dans l'air induirait une pollution atmosphérique inadaptée pour le traitement intensif de forêts infestées par des insectes défoliateurs par exemple.

Certaines enveloppes biodégradables ont été étudiées dans le passé. Ainsi la kératine a été proposée pour former l'enveloppe de projectiles contenant un agent de désinfection dans le cas de la processionnaire du pin (brevet WO 2008/065218). Cependant, outre qu'aucun exemple de contenu aqueux n'est fourni, les travaux récents (notamment ceux de l'INRA), montrent que la kératine est difficilement transformable pour produire industriellement des projectiles que l'on pourrait remplir d'une formulation aqueuse de phéromone.

Par ailleurs, dans le brevet FR 200951799, D. Delhaye décrit un système de billes de paint-ball caractérisées en ce que leurs enveloppes sont composées d'un polymère oxobiodégradable. Ce matériau est un polymère qui contient des métaux de transition qui, sous l'action conjointe de l'oxygène de l'air et des rayonnements U.V., vont dégrader le polymère en micro morceaux qui dans le cas des polyoléfines deviendront biodégradables. De telles enveloppes sont pensées pour véhiculer des engrais, des produits insecticides ou phytosanitaires sous forme liquide et compatibles avec le matériau d'enveloppe.

Les solutions existantes ne sont pas satisfaisantes pour la dispersion de phéromones qui ne sont pas compatibles avec les matériaux oxodégradables. En outre une formulation liquide entraîne des éclaboussures au moment de l'impact et de l'éclatement et une perte importante en matière active. Les inventeurs ont donc conçu des formulations aqueuses de phéromones qui sont compatibles avec les enveloppes de projectiles en polymère oxobiodégradable et qui permettent de relarguer des phéromones d'insecte pendant plusieurs mois ce qui permet d'induire la confusion sexuelle des insectes ravageurs de forêts ou de vergers.

### DESCRIPTION DE L'INVENTION

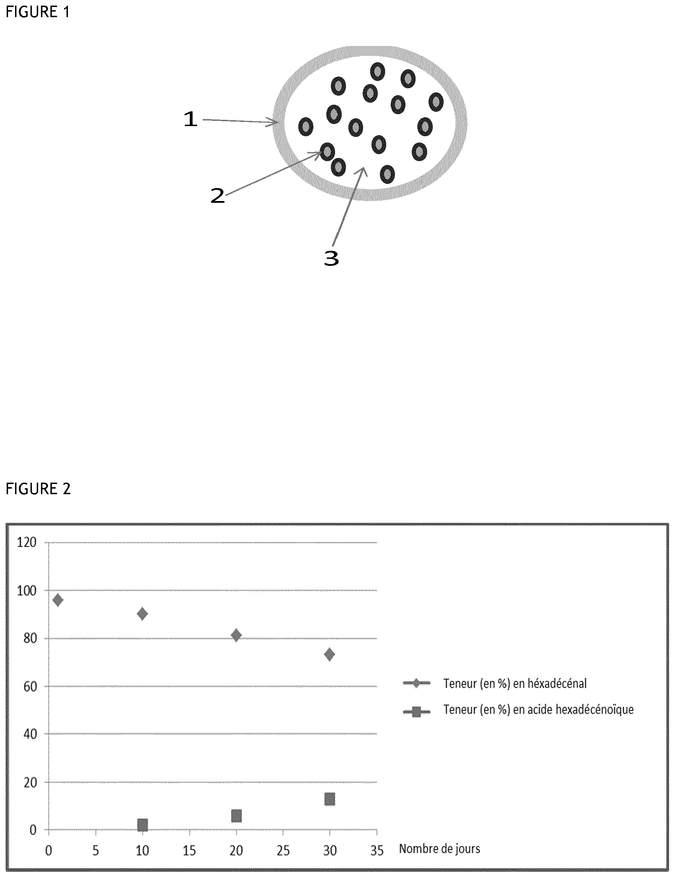

La demanderesse a donc mis au point un nouveau type de projectile capable de traiter les arbres contre des invasions d'insectes représenté sur la figure 1

Ainsi, dans un premier mode de réalisation, la présente invention concerne un projectile comprenant une enveloppe et un remplissage caractérisé en ce que l'enveloppe comprend un polymère ou copolymère thermoplastique oxodégradable et en ce que le remplissage consiste en une formulation aqueuse de type émulsion « huile dans eau » dans laquelle la phase aqueuse comprend un agent gélifiant et la phase grasse comprend une matrice constituée d'un mélange huile et/ou cire et de phéromone.

Dans un second mode de réalisation le projectile selon l'invention est caractérisé en ce que le polymère ou copolymère thermoplastique oxodégradable de l'enveloppe est choisi dans le groupe constitué par les polyoléfines oxodégradables.

De manière préférentielle, le polymère ou copolymère thermoplastique oxodégradable est choisi dans le groupe constitué par le polyéthylène oxodégradable et le polypropylène oxodégradable.

Dans un autre mode de réalisation de la présente invention, le projectile est caractérisé en ce que l'émulsion de la formulation aqueuse comprend 20 à 70% en poids de phase aqueuse et 80 à 30% de phase grasse.

Le projectile selon l'invention, dans un autre mode de réalisation de l'invention est caractérisé en ce que l'agent gélifiant est choisi dans le groupe constitué par les éthers de cellulose, les polyuréthanes et les copolymères d'acide (meth)acrylique et d'acrylate d'éthyle.

De manière particulière, le projectile selon l'invention est caractérisé en ce que l'agent gélifiant est un copolymère d'acide (meth)acrylique et d'acrylate d'éthyle comprenant :
- entre 30 et 40 % en poids d'acide méthacrylique
- entre 45 et 60% en poids d'acrylate d'éthyle
- entre 5 et 20% en poids d'un macromonomère de formule générale (I) : 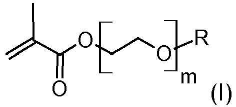 où m est un entier compris entre 1 et 40, de préférence compris entre 10 et 30 et où R est un groupement de formule générale CnH2n+1 dans lequel n est un entier compris entre 9 et 25, de préférence entre 10 et 20 et encore préférentiellement égal à 12 ; le pH de la phase aqueuse est compris entre 5 et 8.

Dans un mode de réalisation particulier de l'invention, le projectile selon l'invention est caractérisé en ce que la phase grasse comprend de 0 à 90% en poids de cire, particulièrement de 10 à 80% en poids de cire, de 0.1 à 25 % en poids de phéromone et de 0 à 90% en poids d'huile, particulièrement de 10 à 80 % en poids d'huile et de 0 à 0.8% en poids de stabilisant, anti oxydant et anti U.V.

Selon une autre mode de réalisation de l'invention la phéromone du projectile sest choisie dans le groupe des phéromones d'insectes à chaîne grasse, en particulier une phéromone sexuelle des papillons des processionnaires du pin, des papillons des processionnaires du chêne, de la pyrale du buis, des bombyx et des carpocapses.

C'est aussi un autre objet de la présente invention que de fournir un projectile tel que défini ci-avant, caractérisé en ce que le ratio massique enveloppe/remplissage est compris entre 1/20 et 1/200.

Aussi dans un mode de réalisation de l'invention, le projectile est caractérisé en ce que l'épaisseur de l'enveloppe est comprise entre 50 et 500 µm, préférentiellement entre 80 et 250 µm.

Dans un mode particulier de réalisation de l'invention, le projectile est caractérisé en ce qu'il s'agit d'une sphère de diamètre compris entre 0,5 et 5 cm, de préférence entre 1 et 3 cm.

Afin d'assurer un étalement à l'impact satisfaisant, le projectile selon l'une des variantes de l'invention est caractérisé en ce que la viscosité de la formulation aqueuse du remplissage est comprise entre 1000 et 15000 centipoises à 25°C, particulièrement entre 2000 et 10000 centipoises à 25°C.

Dans un autre mode de réalisation, le projectile selon l'invention est caractérisé en ce que le ratio massique huile et/ou cire/phéromone dans la phase grasse est compris entre 70/30 et 99.5/0.5, plus particulièrement entre 80/20 et 98/2.

La présente invention vise aussi utilisation d'un projectile selon l'un des modes de réalisation ici décrit pour la protection d'une parcelle d'arbres contre un insecte ravageur caractérisée par le fait que le projectile est projeté et éclate sur le tronc des arbres de la parcelle à protéger. En particulier, le projectile est projeté avec une force suffisante pour faire éclater l'enveloppe et faire adhérer tout ou partie du remplissage sur le tronc.

L'utilisation d'un projectile selon l'invention tel que décrit est aussi caractérisée en ce que l'insecte ravageur est choisi dans le groupe constitué par le papillon de la processionnaire du pin, le papillon de la processionnaire du chêne, la pyrale du buis, les bombyx et les carpocapses.

Enfin, dans un mode de réalisation particulier de l'invention, l'utilisation du projectile tel que décrit est caractérisée en ce que ledit projectile est projeté et éclate à la hauteur de la canopée

Ainsi le projectile selon l'invention comprend une enveloppe et un remplissage et est caractérisé en ce que l'enveloppe comprend un polymère ou copolymère thermoplastique oxodégradable et le remplissage comprend une formulation aqueuse de type émulsion « huile dans eau » dans laquelle la phase aqueuse comprend un agent gélifiant et la phase grasse comprend une matrice constituée d'un mélange huile et/ou cire et de phéromone.

La formulation aqueuse du projectile est capable de relarguer lentement des phéromones et de résister au lavage par les intempéries, pour contrôler le comportement d'insectes ou d'animaux.

Le projectile peut avoir une forme sphérique, ovoïde, cylindrique ou conique ou toute autre forme moulée. De préférence le projectile est une sphère de diamètre compris entre 0,5 et 5 cm, particulièrement entre 1 et 3 cm de diamètre.

L'enveloppe du projectile est constituée d'un polymère ou copolymère thermoplastique oxodégradable, ou oxobiodégradable, de préférence de polyéthylène ou polypropylène oxodégradable, ou oxobiodégradable.

L'expression « thermoplastique » fait référence à une matière qui se ramollit d'une façon répétée lorsqu'elle est chauffée au-dessus d'une certaine température, mais qui, au-dessous, redevient dure. Une telle matière conservera donc toujours de manière réversible sa thermoplasticité initiale.

L'expression « oxodégradable » ou « oxobiodégradable » fait référence à un matériau polymère qui peut se dégrader biologiquement dans la nature, après avoir au préalable subi une dégradation oxydative abiotique sous les effets combinés de la chaleur et des UV, par une oxydation des liaisons carbone-hydrogène qui entraine une baisse du poids moléculaire de la matière. La matière oxydée en présence de microorganismes est alors convertie en CO2, en eau et en une biomasse non stérile, sans générer de résidus toxique

Le remplissage des projectiles selon l'invention comprend, ou consiste en, une formulation aqueuse qui permet de relarguer lentement les phéromones. Cette formulation aqueuse comprend, ou consiste en, une émulsion de type huile dans eau qui comprend de 20 à 70% en poids de phase aqueuse et de 80 à 30% en poids d'une phase grasse dispersée comprenant, ou consistant en, une matrice à base de cire naturelle et/ou d'huile naturelle biodégradables dans laquelle est incorporée la ou les phéromones destinée à contrôler le comportement des insectes.

La stabilité de l'émulsion de la phase aqueuse est assurée par la présence d'un agent gélifiant, ou agent modifiant de rhéologie, hydrosoluble. L'agent gélifiant, ou agent modifiant de rhéologie, contribue à augmenter la viscosité de la phase aqueuse de remplissage afin que celle-ci ne s'éparpille pas au moment de l'éclatement du projectile lors de l'impact. La nature de l'agent gélifiant hydrosoluble n'est pas critique en soit à partir du moment où il est compatible avec la viscosité recherchée et avec la phéromone contenue dans la phase grasse. L'agent gélifiant, ou agent modifiant de rhéologie, hydrosoluble peut être choisi parmi les polysaccharides ou encore dans le groupe comprenant les éthers de cellulose, le polyuréthanes, ou les copolymères de type HASE.

Comme éther de cellulose, on peut citer la méthyl cellulose, l'hydroxymethyl cellulose, l'hydroxyéthylcellulose, l'hydroxypropylcellulose, l'hydroxyéthyl méthyl cellulose, l'hydroxypropyl méthyl cellulose et la carboxyméthylcellulose.

On rappelle que les polymères de type HASE : (hydrophobically modified alkali swellable emulsion) sont des copolymères d'acide (méth)acrylique et d'acrylate d'alkyle fabriqués par polymérisation radicalaire en émulsion qui ont la propriété lors de leur neutralisation par une base telle que la soude ou l'ammoniac de devenir hydrosolubles et de modifier la rhéologie de l'eau, mais dont la composition comporte en plus des macromonomères hydrophobes de formule générale :

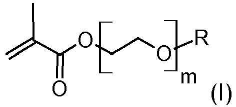

Où m est un entier, compris entre 1 et 40, en général supérieur à 5 et où R est un groupement de formule générale CₙH₂ₙ₊₁ dans lequel n est un entier compris entre 10 et 30, particulièrement entre 9 et 25, de préférence encore entre 10 et 20. Ils présentent aussi la capacité de modifier la rhéologie de la solution aqueuse.

Ils sont préparés selon des méthodes bien connues de l'homme du métier au moyen d'un agent de transfert de chaînes du type mercaptan.

La quantité d'agent gélifiant hydrosoluble dans la phase aqueuse pourra être comprise entre 5 % en poids et 20 % en poids. De manière particulière entre 5 et 10 % en poids de la phase aqueuse. La quantité de cet agent gélifiant hydrosoluble pourra être ajustée en fonction de sa nature et de ses capacités gélifiantes et ce afin d'obtenir la viscosité voulue pour la formulation aqueuse de remplissage des projectiles selon l'invention.

De manière préférentielle l'agent gélifiant est un copolymère acrylique, en particulier un copolymère acrylique de type HASE et est caractérisé en ce qu'il contient :
- Entre 30 et 40 % en poids d'acide méthacrylique,
- Entre 45 et 60 % en poids d'acrylate d'éthyle,
- Entre 5 % et 20 % en poids d'un macromonomère de formule générale (I) :

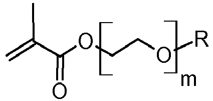

Où m est un entier compris entre 1 et 40, de préférence compris entre 10 et 30 et où R un groupement de formule générale CnH2n+1 dans lequel n est un entier compris entre 9 et 25, de préférence entre 10 et 20 et encore préférentiellement égal à 12.

Dans le cas de mise en oeuvre d'un copolymère acrylique, en particulier un copolymère acrylique de type HASE tel que défini ci-dessus comme gélifiant hydrosoluble, sa quantité dans la phase aqueuse pourra être comprise entre 5 et 15 % en poids, plus particulièrement entre 5 et 10 % en poids. Afin d'obtenir la viscosité désirée, le pH de la phase aqueuse sera compris entre 5 et 8, particulièrement entre 6 et 8 afin d'assurer la gélification de ce copolymère et d'atteindre la viscosité désirée.

La phase grasse dispersée de l'émulsion comprise dans la formulation aqueuse du remplissage des projectiles selon l'invention comprend de 10 à 90 % en poids de cire, particulièrement de 60 à 80% en poids de cire, 10 à 90% en poids d'huile, particulièrement 8 à 35% en poids d'huile, 0.1 à 25 % en poids de phéromone, particulièrement de 0.5 à 20% en poids de phéromone, et de 0 à 0.8% en poids, particulièrement de 0.1 à 0.5% en poids de stabilisant.

Par « cire », on entend au sens de l'invention, un composé lipophile, solide à température ambiante (environ 25°C) et pression atmosphérique (760 mm Hg). Les cires susceptibles d'être utilisées dans une composition selon l'invention peuvent être choisies parmi les cires d'origine animale, végétale, minérale ou de synthèse et leurs mélanges. On peut notamment utiliser les cires hydrocarbonées comme la cire d'abeilles, la cire de lanoline, et les cires d'insectes de Chine; la cire de riz, la cire de Carnauba, la cire de Candelila, la cire de jojoba, la cire d'Ouricurry, la cire d'Alfa, la cire de fibres de liège, la cire de canne à sucre, la cire du Japon et la cire de sumac, la cire de montan, les cires microcristallines, les paraffines et l'ozokérite; les cires de polyéthylène, les cires obtenues par la synthèse de Fisher-Tropsch et les copolymères cireux ainsi que leurs esters. On peut aussi citer les cires obtenues par hydrogénation catalytique d'huiles animales ou végétales ayant des chaînes grasses, linéaires ou ramifiées, en C8-C32. Parmi celles-ci, on peut notamment citer l'huile de jojoba hydrogénée, l'huile de tournesol hydrogénée, l'huile de ricin hydrogénée, l'huile de coprah hydrogénée et l'huile de lanoline hydrogénée, le tétrastéarate de di-(triméthylol-1,1,1 propane). On peut également utiliser les cires obtenues par transesterification et hydrogénation d'huiles végétales, telles que l'huile de ricin ou d'olive, comme les cires vendues sous les dénominations de Phytowax ricin 16L64® et 22L73® et Phytowax Olive 18L57 par la société SOPHIM.

Par « huile », on entend un composé non aqueux, non miscible à l'eau, liquide à température ambiante (environ 25 °C) et pression atmosphérique (760 mm de Hg). L'huile selon l'invention pourra être choisie parmi les huiles végétales. De manière particulière l'huile selon l'invention sera choisie dans le groupe constitué par l'huile de tournesol, l'huile d'arachide, l'huile de soja, l'huile de colza, l'huile de maïs, l'huile d'olive, l'huile de raisin, l'huile de noix, l'huile de lin, l'huile de palme, l'huile de coco, l'huile d'argan, l'huile d'avocat, l'huile d'amande, l'huile de noisette, l'huile de pistache, l'huile de riz, l'huile de coton, l'huile de germe de blé, l'huile de sésame, ou leurs mélanges. De préférence, l'huile est choisie en fonction de la culture que l'on veut protéger des insectes ravageurs, en particulier des lépidoptères.

Un stabilisant, ou un mélange de stabilisants, anti oxydant et/ou anti UV, peut être contenu dans le remplissage des projectiles selon l'invention afin de préserver les composants de la phase grasse, en particulier la ou les phéromones de l'oxydation et/ou des UV. Le stabilisant pourra être choisi dans le groupe constitué par le n-butyl-4-hydroxybenzoate (BHB), le tocophérol, la ter-butyl-hydroquinone (TBH), le n-propyl-gallate (PG), le tbutyl-hydroxyanisole (BHA), le para méthyl-hydroxy-benzoate (MHB), le N,N diétyl-toluamide (DT), le t-butyl-5 hydroxy-toluene (BHT) et l'□-thioglycérine (TG), les nitroxides et les alcoxyamines et leurs mélanges. Le ou les stabilisants permettent de préserver l'huile, la cire et/ou la phéromone de l'oxydation et/ou des UV.

La ou les phéromone(s) contenue(s) dans les projectiles selon l'invention sont particulièrement des phéromones d'insectes, plus particulièrement des phéromones d'insectes à chaine grasse. Plus particulièrement il s'agit de phéromones de lépidoptères à chaine grasse. De manière particulière les projectiles selon l'invention contiennent des phéromones sexuelles de lépidoptères. Les phéromones sexuelles d'insectes comme les lépidoptères sont caractérisées en ce qu'elles sont composées de mélanges de molécules à chaines grasses insaturées avec des terminaisons alcool, ester ou aldéhyde.

Comme phéromone contenue dans les projectiles selon l'invention, on peut citer les phéromones des pyrales, des carpocapses ravageurs des arbres comme les buis, les châtaigniers, les noyers, les pommiers, les poiriers. *Plus particulièrement la phéromone peut être une* phéromone sexuelle des papillons des processionnaires du pin et du chêne. Connues pour leur mode de déplacement en file indienne, les larves nichent dans les aiguilles de diverses espèces de pins ou dans les feuilles de chênes, provoquant un affaiblissement important des arbres. Un point commun à ces ravageurs est que les papillons se déplacent dans la canopée des arbres et c'est un des avantages de l'invention de pouvoir placer des points de diffusion de phéromone dans les arbres à des hauteurs allant jusqu'à plusieurs mètres sans avoir besoin de transporter des équipements lourds comme des échelles ou des nacelles.

L'enveloppe des projectiles selon la présente invention assure une résistance mécanique lors de la conservation, de la manipulation et lors de la projection, par exemple à l'aide d'un pistolet pneumatique de type paint-ball, et permet aussi par sa rupture lors de l'impact sur un support dur tel que le tronc d'un arbre, l'éclatement du projectile et la libération du remplissage. Le ratio massique entre enveloppe et remplissage peut être choisi afin de favoriser soit la résistance mécanique ou la facilité d'éclatement à l'impact et ce selon la taille du projectile, la nature du matériau de l'enveloppe et la nature de la formulation de remplissage. Dans ce contexte, la nature du matériau constitutif de l'enveloppe et ses caractéristiques dimensionnelles ainsi que la viscosité du remplissage sont telles que l'impact provoqué d'un projectile sur une surface dure provoque l'éclatement de l'enveloppe et l'étalement de la formulation de remplissage en évitant les éclaboussures. De manière particulière, le ratio massique enveloppe/remplissage pourra être compris entre 1/20 et 1/200.

L'épaisseur de l'enveloppe des projectiles selon l'invention dépendra de la taille du projectile, du ratio massique enveloppe/remplissage, de la viscosité dudit remplissage et aussi de la nature du matériau thermoplastique oxodégradable.

L'épaisseur de l'enveloppe pourra ainsi être comprise entre 50 et 500 µm, particulièrement entre 80 et 250 µm, voire plus particulièrement entre 100 et 200 µm par exemple. A titre d'exemple, pour un projectile sphérique, dont le matériau de l'enveloppe est un polymère ou copolymère thermoplastique oxodégradable tel que le polypropylène oxodégradable, de taille de l'ordre de 1,75 cm de diamètre, l'épaisseur de l'enveloppe est de l'ordre de 120 µm.

Typiquement, un procédé de fabrication de projectiles selon l'invention correspond à celui décrit dans WO2014016510 et comprend les étapes suivantes: réception de deux pans de film thermoplastique oxodégradable, chaque pan comportant au moins une colonne de cavités formées; rapprochement des deux pans pour mettre en correspondance les cavités respectives de chaque pan et placage des pans par des paires de barres qui pincent successivement les pans de part et d'autre des paires de colonnes de cavités, remplissage de la poche délimitée entre deux paires de barres par la formulation de remplissage afin de remplir les cavités et soudure des pans autour des cavités pour former les projectiles.

Outre son rôle de stabilisant, l'agent gélifiant, ou modifiant de rhéologie, permet de contrôler la viscosité de la formulation de remplissage. Lors de la fabrication des projectiles, la formulation aqueuse de remplissage doit être suffisamment liquide pour permettre le remplissage des projectiles à des cadences élevées. Lors de l'impact sur un tronc, elle doit être suffisamment visqueuse pour assurer la formation d'un film d'épaisseur suffisante.

La viscosité de la formulation aqueuse de remplissage du projectile selon l'invention est choisie de manière à être suffisamment basse de manière à permettre un remplissage aisé des cavités des projectiles lors de leur fabrication mais suffisamment élevée pour limiter les éclaboussures au moment de l'éclatement du projectile lors de l'impact de celle-ci sur une surface dure, en particulier un tronc. L'agent gélifiant et les quantités de cet agent ainsi que les conditions propres à sa nature permettent de déterminer la viscosité de la formulation aqueuse de remplissage. Ainsi dans le cas de mise en oeuvre de copopymères et polymères de type HASE leur gélification étant déterminée par le pH, le pH de la phase aqueuse sera compris entre 5 et 8, particulièrement entre 6 et 8 afin de gélifier ledit polymère. En effet, les projectiles selon la présente invention étant particulièrement destinés à l'application de composition phéromonale au niveau des troncs des arbres, si la viscosité de la formulation de remplissage est trop basse, des éclaboussures sont générées au moment de l'éclatement du projectile suite à l'impact, et une partie importante de ladite formulation risque d'être perdue et retombe sur le sol.

La viscosité Brookfield de la formulation aqueuse de remplissage est ainsi comprise entre environ 1000 et environ 15000 Centipoises, à 25°C, particulièrement entre 2000 et 12000 centipoises, à 25°C, plus particulièrement entre 2500 et 10000 centipoises, à 25°C. La viscosité Brookfield de la formulation aqueuse de remplissage peut être mesurée à l'aide d'un viscosimètre Brookfield consistant en l'application d'une force de mouvement à un produit - la formulation aqueuse - en mettant en rotation à vitesse fixe, un mobile de taille fixe immergé dans ledit produit. La résistance du produit au mouvement de rotation du mobile est enregistrée à l'aide d'un ressort spiralé interne, puis convertie en unité viscosimétrique, par exemple centipoises. A titre d'illustration la viscosité de la formulation aqueuse de remplissage des projectiles selon la présente invention pourra s'établir dans une gamme correspondant à celle allant d'un miel liquide à un miel cristallisé, une mayonnaise ou une pâte à tartiner au chocolat par exemple.

L'ajustement du ratio cire et/ou huile/phéromone dans la matrice de la phase grasse de l'émulsion de la formulation aqueuse de remplissage dépend de la solubilité des phéromones dans le mélange huile+cire. Ce ratio pourra varier entre 70/30 et 99,5/0,5, plus particulièrement entre 80/20 et 98/2, plus particulièrement encore aux environs de 75/25, par exemple. Les projectiles selon l'invention sont projetés contre les troncs d'arbre au moyen d'un système à air comprimé. L'éclatement du projectile provoque l'étalement de la formulation aqueuse qui forme un film à la surface du tronc. Le lent relargage de la phéromone à travers le film ainsi formé permet ensuite de contrôler le comportement des insectes.

De préférence, les insectes ciblés par cette technologie sont des ravageurs des forêts ou des vergers tels que les processionnaires du pin ou du chêne, la pyrale du buis ou les bombyx, les carpocapses (pommier, poirier, châtaigner, noyer...).La projection des projectiles selon l'invention permet de créer dans une forêt ou un espace arboré autant de points de diffusion de phéromone que d'impacts réalisés. Une densité importante d'impacts combinée au relargage contrôlé de la phéromone par chaque diffuseur permet de créer un nuage de phéromone qui empêche le cycle de reproduction de l'insecte de se dérouler convenablement. Cette perturbation permet de réduire la population de nuisibles et donc de préserver les arbres des dégâts qu'ils occasionnent. Les impacts seront situés préférentiellement à hauteur de la canopée et leur nombre sera compris entre 100 et 1000 par hectare.

L'avantage de la technique développée dans cette invention est de permettre le traitement de grandes surfaces sylvestres à un coût maîtrisé tout en n'utilisant que des composants biodégradables ne contenant pas d'autre volatile organique que la phéromone elle-même.
La Figure 1 représente un vue schématique d'un projectile selon l'invention dans laquelle (1) représente l'enveloppe du projectile en matériau thermoplastique oxobiodégradable, (2) représente les particules contenant un mélange de phéromone dans une matrice à base de cire et/ou d'huile et (3) représente la phase aqueuse contenant le gélifiant, ou agent modifiant de rhéologie
La Figure 2 représente la mise en évidence de la dégradation de la phéromone de la pyrale du buis en présence d'un polymère oxobiodégradable.
Figure 3 représente un exemple de projection des projectiles sur des pins illustrant l'intérêt du système qui permet de déposer plusieurs diffuseurs sans effort.

### EXEMPLES:

### Matériels :

Les phéromones utilisées en sylviculture sont soit achetées chez des fabricants industriels soit fabriquées par M2i Development (Lacq, France) selon des procédés connus. Dans le cas des produits synthétisés par M2i Development, leurs caractérisations sont validées par une analyse comparative avec un échantillon référent en chromatographie phase gazeuse.

### Exemple 1 (hors invention) : incompatibilité de la phéromone pure en contact direct avec des matériaux oxo-biodégradables.

La phéromone sexuelle de la pyrale du buis est le mélange du Z et du E-11 hexadécénal dans un ratio 5/1.

Une enveloppe de projectile de paint-ball constituée d'une polyoléfine oxobiodégradable est découpée en petits morceaux de l'ordre de 2 à 5 mm². Les copeaux ainsi obtenus sont placés dans un réacteur contenant un agitateur magnétique. Le réacteur est placé sous azote.

100 mg du mélange d'hexadécénal décrit plus haut sont ajoutés aux copeaux et l'agitation est maintenue jusqu'à ce que le liquide ait été totalement absorbé par les copeaux.

Les copaux sont ensuite séparés en deux parties :
La première moitié est stockée dans un sachet en aluminium, sous azote (témoin). La seconde moitié est placée dans une coupelle transparente fermée sous air à la lumière. Des copeaux sont régulièrement analysés par chromatographie phase gazeuse. L'évolution du mélange phéromonal est reportée dans le graphe suivant (Figure 2) :
On constate sur la figure 2 que la polyoléfine oxobiodégradable décompose le mélange de phéromone en présence d'oxygène lorsque celle-ci est en contact direct avec la polyoléfine. On note entre autre l'apparition de l'acide hexadécénoïque produit d'oxydation de la phéromone. Cet exemple illustre le problème de la compatibilité des phéromones avec les polymères oxobiodégradables et l'importance de protéger la phéromone dans une émulsion comme illustré dans la présente invention.

### Exemple 2 : fabrication de formulations aqueuses contenant des phéromones

Les modifiants de rhéologie acryliques utilisés dans les formulations sont des copolymères acryliques de type HASE fournis par la société Coatex (Gamme Rheotech® ; France).

Le copolymère HASE 1 utilisé pour les exemplifications est constitué de :
35,5 % en poids d'acide méthacrylique,
52,4 % en poids d'acrylate d'éthyle,
12% en poids d'un macromonomère de formule (I) dans laquelle m=30 et n=12.

### Protocole général de fabrication des formulation aqueuse contenant des phéromones :

### - Constituants de la formulation :

| | |
|---|---|
| Phase aqueuse : | Modifiant rhéologique HASE1 |
| | H₂O |
| | NaOH 10% |
| | |
| Solution 1 | Cire/huile |
| | Phéromone |
| | Stabilisant (BHT) |
| | |
| Solution 2 | H₃PO₄ (4%) |

### - Mode opératoire :

La solution 1 est préparée en mettant à fondre à 70 °C, dans un réacteur double enveloppe 4l muni d'une agitation mécanique (IKA) et d'une tige d'agitation standard type ancre ou Impeller, le mélange cire d'abeille, huile de tournesol, phéromone et le stabilisant (BHT). La température interne dans le réacteur doit être supérieure à la température de fusion de la cire.

Dans un second réacteur double enveloppe (20l), muni d'une agitation mécanique (IKA) et d'une tige d'agitation standard type ancre ou Impeller, sous agitation, est préparée la phase aqueuse en chargeant l'eau, la soude et l'additif rhéologique. Ce mélange est porté à une température supérieure au point de fusion de la cire.

Lorsque la solution 1 est fondue, elle est ajoutée, goutte à goutte, à la phase aqueuse à l'aide d'une pompe Watson-Marlow (vitesse de rotation 200) en 5' environ.

Afin d'ajuster la viscosité de la formulation préparée, la solution 2 (acide phosphorique) est enfin ajoutée goutte à goutte en 15'avec une température dans la double enveloppe de 35°C. Le milieu est agité pendant 5' avant d'être refroidi et ramené à température ambiante

### Formulation aqueuse à relargage contrôlé pour la processionnaire du pin

La préparation de la formulation aqueuse de la phéromone de la processionnaire du pin a été réalisée selon la procédure générale ci-dessus avec les quantités de réactifs présentées ci-dessous.

| Essai | 1 |
|---|---|
| Phase aqueuse | |
| modifiant rhéologique HASE 1 | 1.88g |
| H₂O | 15,48g |
| NaOH (10%) | 0,73g |

| Solution 1 | |
|---|---|
| Cire d'abeille | 3,84g |
| Huile de tournesol | 11g |
| Phéromone de la processionnaire du pin | 0,46g |
| Stabilisant (BHT) | 0,46g |

| Solution 2 | |
|---|---|
| H₃PO₄ (4%) | 3.22g |

### Exemple 3 : fabrication de projectiles selon l'invention à partir des formulations de l'exemple 2

Les projectiles selon l'invention, du type billes de paint-ball, ont été fabriqués par la société Polytek selon le procédé décrit dans le brevet WO 2014016510 A1 et dans la présente description. Le matériau utilisé est un polypropylène oxobiodégradable. Le procédé comprend la fourniture de deux films de matériau polymérique semblable (polypropylène oxobiodégradable). La composition de remplissage telle que décrite précédemment est mise à disposition. Les films sont disposés dans une unité d'encapsulation comportant deux tambours de moulage qui comprennent chacun un cylindre dans lequel est formée une pluralité de cavités hémisphériques, lesdits tambours sont disposés de manière à ce que leurs axes soient parallèles et leurs cylindres jointifs, lesdits films défilent en continu dans l'unité d'encapsulation de manière à arriver de manière tangentielle sur lesdits cylindres. Les films sont transformés en parties de capsule de forme sensiblement hémisphérique par rotation contrarotative desdits cylindres des tambours de moulage. La composition de remplissage est introduite dans lesdites parties de capsule qui sont jointes et fermées pour former les enveloppes remplies de la composition phéromonale. Le diamètre des projectiles sensiblement sphériques obtenus est de 1.75 cm (calibre 68).

### Exemple 4 : projection des projectiles de l'exemple 3 sur des arbres

Le transfert de matière est mesuré sur 10 troncs selon le protocole suivant :
Après 24 h (temps nécessaire pour évaporer l'eau), on récupère par grattage sur les troncs le dépôt sec puis chaque échantillon est dissout dans de l'heptane à chaud et filtré de manière à éliminer les particules solides venant du tronc ou des résidus de l'enveloppe. On évapore l'heptane sous pression réduite puis on pèse le résidu qui correspond à la quantité de matière transférée lors de l'impact. On rapporte ensuite cette masse à la masse théorique de matrice et de phéromone contenue dans chaque projectile (1.01g).

Les résultats sont les suivants :

| Tronc | 1 | 2 | 3 | 4 | 5 | 6 | 7 | 8 | 9 | 10 |
|---|---|---|---|---|---|---|---|---|---|---|
| %transfert | 85 | 86 | 90 | 88 | 91 | 86 | 93 | 90 | 85 | 88 |

Soit en moyenne 88.2% de transfert. Ceci démontre que le remplissage des projectiles selon l'invention est quasi totalement retenu sur le support et que l'on ne subit que très peu de perte au moment de l'éclatement des projectiles lors de l'impact sur les troncs.

### Exemple 5 : Essai de confusion sexuelle dans une parcelle de pin maritime.

500 projectiles contenant 1.01 g de formulation huile/cire chargée à 10% de (Z)-13-Hexadecen-11-yn-1-ol acetate, phéromone d'attraction sexuelle du papillon de la processionnaire du pin, dispersée dans 1.2g d'eau et contenant 3% en poids de Hase 1 ont été préparées selon l'exemple 3.

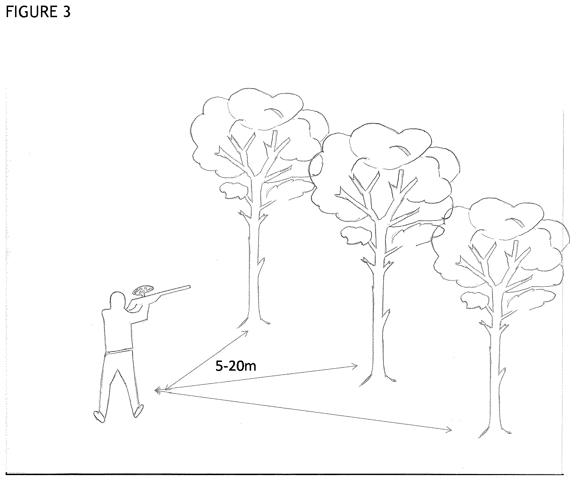

Les 500 projectiles ont été tirés sur les pins d'une parcelle de 5 Ha à raison de 100 projectiles par hectare à une hauteur comprise entre 2m50 et 5m. Le maillage des tirs tend à respecter un tir tous les 10m en fonction de la densité d'arbres (figure 3).

Pour suivre l'évolution de la population sur site, des pièges à phéromones de type Mastrap L@ ont été posés tous les 10 m au milieu de la parcelle. 10 autres pièges ont été répartis à la périphérie de la parcelle (à 25 m de celle-ci). Les résultats sont les suivants :

**Tableau 2 : nombre de captures pour les dix pièges de chaque type (ces nombres indiquent le nombre de captures nouvelles)**

| | Pièges intérieurs | Pièges extérieurs |
|---|---|---|
| T0+1 mois | 9 | 135 |
| T0 +2 mois | 11 | 154 |
| T0+ 3 mois | 14 | 122 |

Cet exemple montre l'efficacité du système de protection par confusion sexuelle selon l'invention dans la protection contre le papillon de la processionnaire du pin.

Par ailleurs, pendant l'essai plusieurs orages ont arrosé la parcelle ce qui valide la résistance des films déposés sur les troncs pendant la période de traitement.

## Revendications

1. Projectile comprenant une enveloppe et un remplissage **caractérisé en ce que** l'enveloppe comprend un polymère ou copolymère thermoplastique oxodégradable et **en ce que** le remplissage consiste en une formulation aqueuse de type émulsion «huile dans eau» dans laquelle la phase aqueuse comprend un agent gélifiant et la phase grasse comprend une matrice constituée d'un mélange huile et/ou cire et de phéromone.

2. Projectile selon la revendication 1, **caractérisé en ce que** le polymère ou copolymère thermoplastique oxodégradable de l'enveloppe est choisi dans le groupe constitué par les polyoléfines oxodégradables.

3. Projectile selon la revendication 2, **caractérisé en ce que** polymère ou copolymère thermoplastique oxodégradable est choisi dans le groupe constitué par le polyéthylène oxodégradable et le polypropylène oxodégradable.

4. Projectile selon l'une des revendications 1 à 3, **caractérisé en ce que** l'émulsion de la formulation aqueuse comprend 20 à 70% en poids de phase aqueuse et 80 à 30% de phase grasse.

5. Projectile selon l'une des revendications 1 à 4, **caractérisé en ce que** l'agent gélifiant est choisi dans le groupe constitué par les éthers de cellulose, les polyuréthanes et les copolymères d'acide (meth)acrylique et d'acrylate d'éthyle.

6. Projectile selon l'une des revendications 1 à 5 **caractérisé en ce que** l'agent gélifiant est un copolymère d'acide (meth)acrylique et d'acrylate d'éthyle comprenant :
- entre 30 et 40 % en poids d'acide méthacrylique
- entre 45 et 60% en poids d'acrylate d'éthyle
- entre 5 et 20% en poids d'un macromonomère de formule générale (I) : 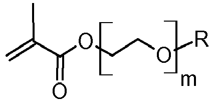 où m est un entier compris entre 1 et 40, de préférence compris entre 10 et et où R est un groupement de formule générale CnH2n+1 dans lequel n est un entier compris entre 9 et 25, de préférence entre 10 et 20 et encore préférentiellement égal à 12 ; le pH de la phase aqueuse est compris entre 5 et 8.

7. Projectile selon l'une des revendications 1 à 6, **caractérisé en ce que** la phase grasse comprend de 0 à 90% en poids de cire, particulièrement de 10 à 80% en poids de cire, de 0.1 à 25 % en poids de phéromone et de 0 à 90% en poids d'huile, particulièrement de 10 à 80 % en poids d'huile et de 0 à 0.8% en poids de stabilisant.

8. Projectile selon l'une des revendications 1 à 7, **caractérisé en ce que** la phéromone est choisie dans le groupe des phéromones d'insectes à chaîne grasse, en particulier une phéromone sexuelle des papillons des processionnaires du pin, des papillons des processionnaires du chêne, de la pyrale du buis, des bombyx et des carpocapses.

9. Projectile selon l'une des revendications 1 à 8, **caractérisé en ce que** le ratio massique enveloppe/remplissage est compris entre 1/20 et 1/200.

10. Projectile selon l'une des revendications 1 à 9, **caractérisé en ce que** l'épaisseur de l'enveloppe est comprise entre 50 et 500 µm, préférentiellement entre 80 et 250 µm.

11. Projectile selon l'une des revendications 1 à 10, **caractérisé en ce que** la viscosité de la formulation aqueuse du remplissage est comprise entre 1000 et 15000 centipoises à 25°c, particulièrement entre 2000 et 10000 centipoises à 25°C.

12. Projectile selon l'une des revendications 1 à 11, **caractérisé en ce que** le ratio massique huile et/ou cire/phéromone dans la phase grasse est compris entre 70/30 et 99.5/0.5, plus particulièrement entre 80/20 et 98/2.

13. Utilisation d'un projectile selon l'une des revendications précédentes pour la protection d'une parcelle d'arbres contre un insecte ravageur **caractérisée par le fait que** le projectile est projeté et éclate sur le tronc des arbres de la parcelle à protéger ; préférentiellement le projectile est projeté avec une force suffisante pour faire éclater l'enveloppe et faire adhérer tout ou partie du remplissage sur le tronc.

14. Utilisation selon la revendication 13, **caractérisée en ce que** l'insecte ravageur est choisi dans le groupe constitué par le papillon de la processionnaire du pin, le papillon de la processionnaire du chêne, la pyrale du buis, les bombyx et les carpocapses.

15. Utilisation selon la revendication 13, **caractérisée en ce que** le projectile est projeté et éclate à la hauteur de la canopée.

## Patentansprüche

1. Geschoss, das eine Hülle und ein Füllgut umfasst, **dadurch gekennzeichnet, dass** die Hülle ein oxo-abbaubares thermoplastisches Polymer oder Copolymer umfasst und dass es sich beim Füllgut um eine wässrige Formulierung vom Typ Öl-in-Wasser-Emulsion handelt, wobei die wässrige Phase ein Geliermittel umfasst und die Fettphase eine aus einer Mischung aus Öl und/oder Wachs und Pheromon bestehende Matrix umfasst.

2. Geschoss nach Anspruch 1, **dadurch gekennzeichnet, dass** das oxo-abbaubare thermoplastische Polymer oder Copolymer der Hülle aus der Gruppe bestehend aus den oxo-abbaubaren Polyolefinen ausgewählt ist.

3. Geschoss nach Anspruch 2, **dadurch gekennzeichnet, dass** das oxo-abbaubare thermoplastische Polymer oder Copolymer aus der Gruppe bestehend aus oxo-abbaubarem Polyethylen und oxo-abbaubarem Polypropylen ausgewählt ist.

4. Geschoss nach einem der Ansprüche 1 bis 3, **dadurch gekennzeichnet, dass** die Emulsion der wässrigen Formulierung 20 bis 70 Gew.-% wässrige Phase und 80 bis 30 Gew.-% Fettphase umfasst.

5. Geschoss nach einem der Ansprüche 1 bis 4, **dadurch gekennzeichnet, dass** das Geliermittel aus der Gruppe bestehend aus den Celluloseethern, den Polyurethanen und den Copolymeren von (Meth)Acrylsäure und Ethylacrylat ausgewählt ist.

6. Geschoss nach einem der Ansprüche 1 bis 5, **dadurch gekennzeichnet, dass** das Geliermittel ein Copolymer von (Meth)Acrylsäure und Ethylacrylat ist, Folgendes umfassend:
- zwischen 30 und 40 Gew.-% Methacrylsäure
- zwischen 45 und 60 Gew.-% Ethylacrylat
- zwischen 5 und 20 Gew.-% eines Makromonomers der allgemeinen Formel (I): 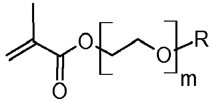 worin m eine ganze Zahl zwischen 1 und 40 ist, vorzugsweise zwischen 10 und 30, und worin R eine Gruppe mit der allgemeinen Formel CnH2n+1 ist, wobei n eine ganze Zahl zwischen 9 und 25 ist, vorzugsweise zwischen 10 und 20, und noch bevorzugter gleich 12 ist; der pH-Wert der wässrigen Phase liegt zwischen 5 und 8.

7. Geschoss nach einem der Ansprüche 1 bis 6, **dadurch gekennzeichnet, dass** die Fettphase 0 bis 90 Gew.-% Wachs umfasst, insbesondere 10 bis 80 Gew.-% Wachs, 0,1 bis 25 Gew.-% Pheromon und 0 bis 90 Gew.-% Öl, insbesondere 10 bis 80 Gew.-% Öl und 0 bis 0,8 Gew.-% Stabilisator.

8. Geschoss nach einem der Ansprüche 1 bis 7, **dadurch gekennzeichnet, dass** das Pheromon aus der Gruppe der Insektenpheromone mit Fettkette ausgewählt ist, insbesondere ein Sexualpheromon der Falter des Pinien-Prozessionsspinners, der Falter des Eichen-Prozessionsspinners, des Buchsbaumzünslers, der Schwammspinner und der Wickler.

9. Geschoss nach einem der Ansprüche 1 bis 8, **dadurch gekennzeichnet, dass** das Gewichtsverhältnis Hülle/Füllgut zwischen 1/20 und 1/200 liegt.

10. Geschoss nach einem der Ansprüche 1 bis 9, **dadurch gekennzeichnet, dass** die Dicke der Hülle zwischen 50 und 500 µm liegt, bevorzugt zwischen 80 und 250 µm.

11. Geschoss nach einem der Ansprüche 1 bis 10, **dadurch gekennzeichnet, dass** die Viskosität der wässrigen Formulierung des Füllguts bei 25 °C zwischen 1000 und 15000 Centipoise liegt, insbesondere zwischen 2000 und 10000 Centipoise.

12. Geschoss nach einem der Ansprüche 1 bis 11, **dadurch gekennzeichnet, dass** das Gewichtsverhältnis Öl und/oder Wachs/Pheromon in der Fettphase zwischen 70/30 und 99,5/0,5 liegt, insbesondere zwischen 80/20 und 98/2.

13. Verwendung eines Geschosses nach einem der vorhergehenden Ansprüche zum Schutz eines Areals mit Bäumen gegen ein Schadinsekt, **dadurch gekennzeichnet, dass** das Geschoss auf den Stamm der Bäume des zu schützenden Areals abgeschossen wird und dort platzt; bevorzugt wird das Geschoss mit einer Kraft abgeschossen, die genügt, um die Hülle platzen zu lassen und ein Anhaften der Gesamtheit oder eines Teils des Füllguts am Stamm zu bewirken.

14. Verwendung nach Anspruch 13, **dadurch gekennzeichnet, dass** das Schadinsekt aus der Gruppe bestehend aus dem Falter des Pinien-Prozessionsspinners, dem Falter des Eichen-Prozessionsspinners, dem Buchsbaumzünsler, den Schwammspinnern und den Wicklern ausgewählt ist.

15. Verwendung nach Anspruch 13, **dadurch gekennzeichnet, dass** das Geschoss auf die Höhe der Kronenschicht abgeschossen wird und dort platzt.

## Claims

1. A projectile comprising a shell and a fill material **characterized in that** the shell comprises an oxo-degradable thermoplastic polymer or copolymer and **in that** the fill material consists of an aqueous formulation of "oil-in-water" emulsion type wherein the aqueous phase comprises a gelling agent and the oil phase comprises a matrix consisting of a mixture of oil and/or wax and pheromone.

2. The projectile according to claim 1, **characterized in that** the oxo-degradable thermoplastic polymer or copolymer of the shell is selected from the group consisting of oxo-degradable polyolefins.

3. The projectile according to claim 2, **characterized in that** the oxo-degradable thermoplastic polymer or copolymer is selected from the group consisting of oxo-degradable polyethylene and oxo-degradable polypropylene.

4. The projectile according to one of claims 1 to 3, **characterized in that** the emulsion of the aqueous formulation comprises 20 to 70 wt.% aqueous phase and 80 to 30% oil phase.

5. The projectile according to one of claims 1 to 4, **characterized in that** the gelling agent is selected from the group consisting of cellulose ethers, polyurethanes and copolymers of (meth)acrylic acid and ethyl acrylate.

6. The projectile according to one of claims 1 to 5, **characterized in that** the gelling agent is a copolymer of (meth)acrylic acid and ethyl acrylate comprising:
- 30 to 40 wt.% methacrylic acid
- 45 to 60 wt.% ethyl acrylate
- 5 to 20 wt.% macromonomer of general formula (I): 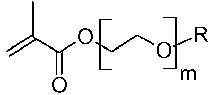 where m is an integer from 1 to 40, preferably from 10 to 30, and where R is a group of general formula CnH2n+1 wherein n is an integer from 9 to 25, preferably from 10 to 20, and more preferentially equal to 12; the pH of the aqueous phase is from 5 to 8.

7. The projectile according to one of claims 1 to 6, **characterized in that** the oil phase comprises from 0 to 90 wt.% wax, particularly from 10 to 80 wt.% wax, from 0.1 to 25 wt.% pheromone and from 0 to 90 wt.% oil, particularly from 10 to 80 wt.% oil and 0 to 0.8 wt.% stabilizer.

8. The projectile according to one of claims 1 to 7, **characterized in that** the pheromone is selected from the group of fatty-chain pheromones of insects, in particular a sex pheromone of pine processionary moths, oak processionary moths, box tree moths, silk moths and codling moths.

9. The projectile according to one of claims 1 to 8, **characterized in that** the weight ratio of shell to fill material is 1:20 to 1:200.

10. The projectile according to one of claims 1 to 9, **characterized in that** the thickness of the shell is 50 to 500 µm, preferentially 80 to 250 µm.

11. The projectile according to one of claims 1 to 10, **characterized in that** the viscosity of the aqueous formulation of fill material is from 1000 to 15000 centipoises at 25°C, particularly from 2000 to 10000 centipoises at 25°C.

12. The projectile according to one of claims 1 to 11, **characterized in that** the weight ratio of oil and/or wax to pheromone in the oil phase is from 70:30 to 99.5:0.5, more particularly from 80:20 to 98:2.

13. Use of a projectile according to one of the preceding claims for protecting a stand of trees against an insect pest **characterized by** the fact that the projectile is projected and bursts on the trunk of the trees of the stand to be protected; preferentially the projectile is projected with sufficient force to cause the shell to burst and to cause all or part of the fill material to adhere to the trunk.

14. Use according to claim 13, **characterized in that** the insect pest is selected from the group consisting of the pine processionary moth, the oak processionary moth, the box tree moth, the silk moths and the codling moths.

15. Use according to claim 13, **characterized in that** the projectile is projected and bursts at the canopy level.
